# EUROPEAN PATENT SPECIFICATION

(11) **EP 3 153 715 B1**
(45) Date of publication and mention of the grant of the patent: **02.01.2019**
(21) Application number: 16191190.4
(22) Date of filing: 28.09.2016
(51) Int. Cl.: F16B 12/20, A47B 91/02

(54) **JOINING DEVICE WITH LEVELLER HAVING MINIMUM VISIBILITY FOR PARTS OF FURNITURE AND FURNISHING ITEMS**
MINIMALER SICHTBARE HÖHENVERSTELLBARE VERBINDUNGSVORRICHTUNG FÜR MÖBELTEILEN UND MÖBELN
DISPOSITIF D'ASSEMBLAGE AVEC VISIBILITÉ MINIMALE POUR DES PIÈCES DE MEUBLE ET DES ARTICLES D'AMEUBLEMENT

(30) Priority: 09.10.2015 IT UB20154249
(43) Date of publication of application: 12.04.2017
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Martegani, Franco

(56) References cited:
- EP-A1- 0 503 701
- WO-A1-92/03663
- DE-A1- 2 701 871

## Description

The present invention relates to a joining device, suitable for a piece of furniture comprising at least two panels (11, 12), with a leveller having minimum visibility for parts of furniture and furnishing items.

The joining between two panels, for example between a shoulder of a piece of furniture and a base, or in any case a shelf, is currently effected in the furniture and furnishing field using various procedures and with different solutions.

Examples of these solutions are known for example from patents US7494297, US5567081, US6547477 and US4408923.

For example, the document WO92/03663 discloses a securing device for use in the construction of pieces of furniture which comprises a horizontal panel having an edge face which butts against a major face of a vertical panel, a member for supporting the weight of the piece of furniture, the device comprising a base having on its underside a mounting for, or at least a part of, said member, the upper side of the base being adapted to engage in and support said horizontal panel, and said base being provided with one part of a two part securing means, the other part of said securing means being adapted for engagement in said major face of said vertical panel, said securing means being operable to draw said base towards said vertical panel whereby in use to both secure said base to the vertical panel and to rigidly secure said horizontal panel in position relative to said vertical panel.

These known solutions have a certain complexity and in any case have a certain visibility, as they require closing elements of the seats or holes necessary for positioning the elements that effect the joining.

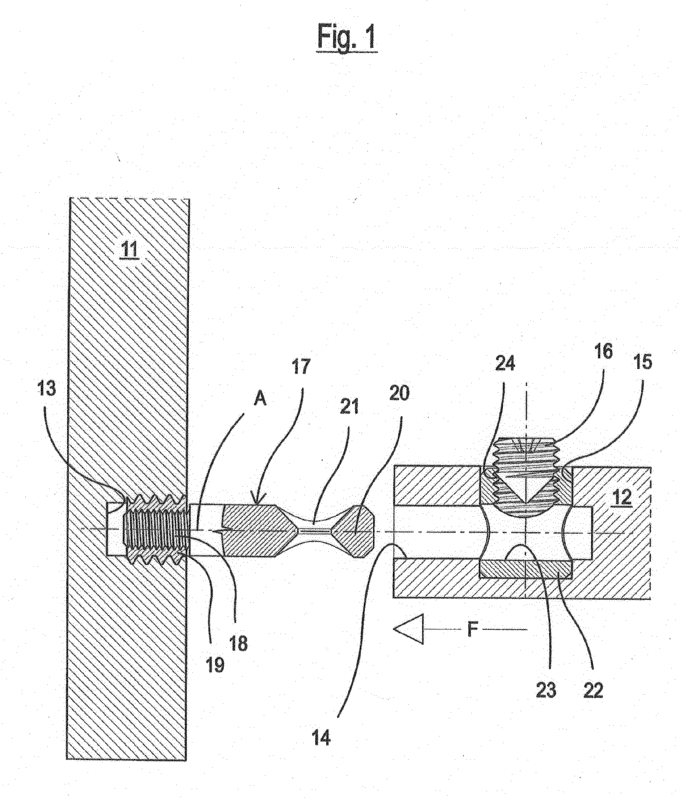

Much more simply, figures 1, 2 and 3 show a known solution of a joining device for parts of furniture and furnishing items, for example between a shoulder of a piece of furniture and a base, or in any case a shelf.

In the known solution illustrated, holes must be provided in both a shoulder 11 and a base 12 of a piece of furniture, both partially shown in a connection part of the same. The shoulder 11, in fact, provides a horizontal blind hole 13 and the base 12 even provides a double hole 14, 15. More specifically, a horizontal hole 14 to be aligned with the hole 13 of the shoulder 11, and a vertical hole 15, formed in the upper surface of the base 12, which intersects the first hole 14, for the insertion of a blocking element, for example a grub screw 16, wherein both holes are blind.

Said hole 13 has an axis A which is perpendicular to the shoulder 11.

This known joining device provides the positioning of a pin 17 with a first threaded end 18 inside an internally threaded bush 19 positioned in the hole 13 of the shoulder 11. The pin 17 contains, at the other end 20, a housing 21 for an end of the grub screw 16.

A bush 22 is housed in the vertical hole 15 of the base 12, which provides a horizontal pass-through hole 23 for receiving the protruding end 20 of the pin 17 and a vertical threaded pass-through hole 24 which receives the grub screw 16.

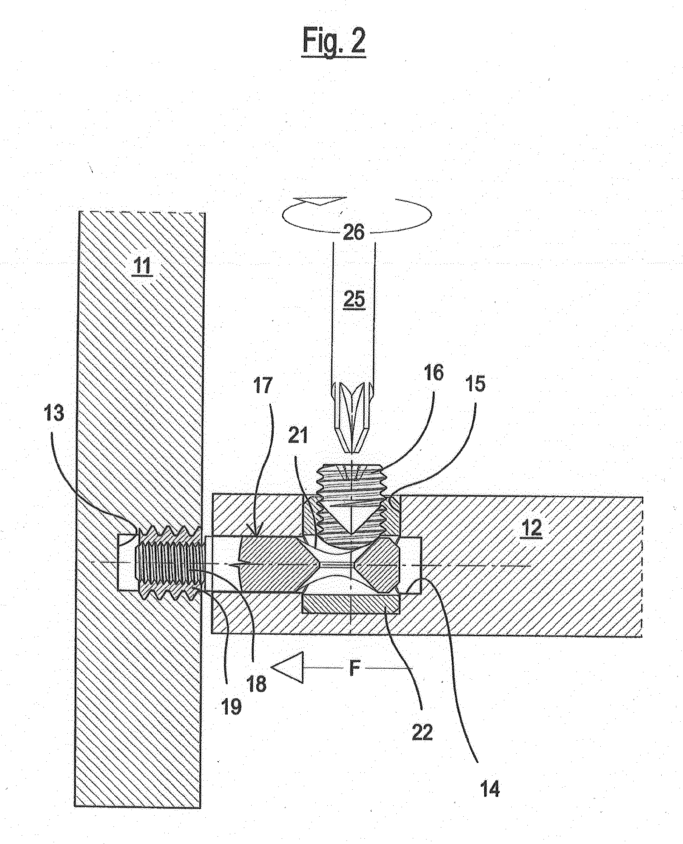

By thus positioning said elements forming the known joining device and juxtaposing the shoulder and the base according to the arrow F of figure 1, the coupling of figure 2 is obtained, with the pin 17 inserted in the hole 14 of the base 12 and in the bush 22.

The grub screw 16 is then screwed, with a tool 25, according to the arrow 26, into the bush 22 so that the tip of the grub screw 16 is positioned in the housing 21 provided at the free end 20 of the pin 17.

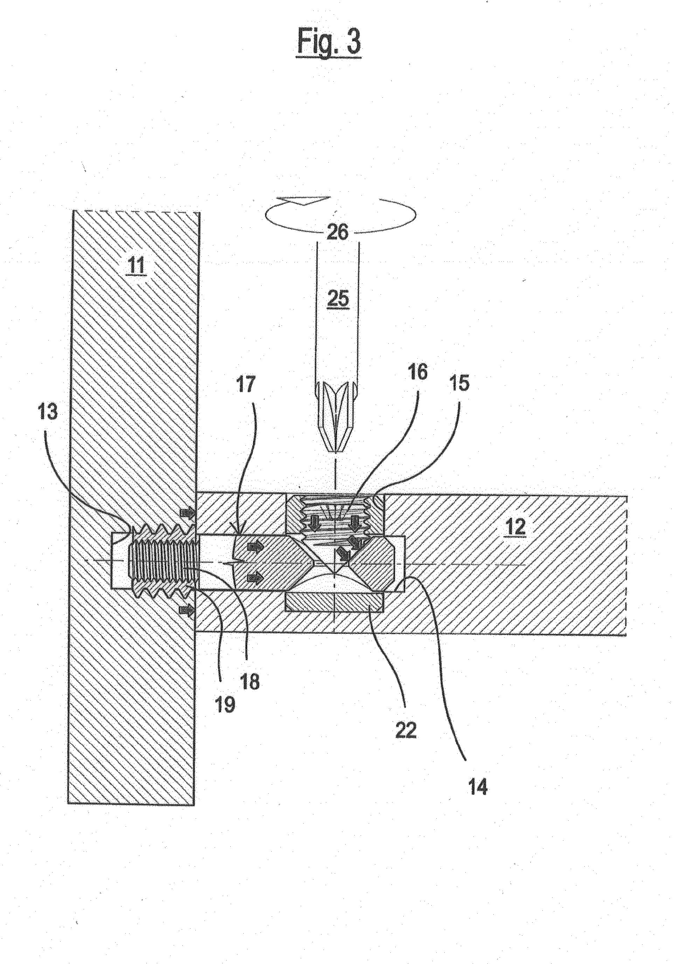

The tightening of the grub screw 16 pushes the base 12 against the shoulder 11 forming the final stable position shown in figure 3.

In this known solution, the blocking group is in the base, it is arranged perpendicular to the base and to the movement or approach direction and tightening between the shoulder and base. Only the pin, with which the blocking group cooperates, is provided in the thickness of the shoulder or side panel.

Said figure 3 indicates, by means of a series of arrows, the scheme of forces at play between the shoulder 11 and base 12 of the piece of furniture and between the parts of the joining device.

This final position also shows how the end of the hole 15 is present on the upper surface of the base 12, which is normally covered with a closing cap (not shown).

Said hole and the corresponding cap form a visible part of the joining device.

In the first place, this part does not have an aesthetically valid appearance as, although there is the presence of the cap, it shows how the joining has been effected. Furthermore, the cap itself, which is difficult to be brought specifically in line with the surface of the base, represents an obstacle for the insertion of any object, creating a protrusion, even if minimum, with respect to the upper surface of the base.

The presence of at least two holes in the base, moreover, intersecting each other, causes a weakening of the base itself that must sustain loads representing a possible cause of breakage.

Another problem which arises in the known devices is associated with the levelling. In order to effect this, a levelling device must be associated with a joining device, with considerable encumbrance and complexity for a correct application.

The general objective of the present invention is to provide a joining device between parts of furniture and furnishing items, such as a shoulder and a base, capable of solving the drawbacks of the known art indicated above, in an extremely simple, economical and particularly functional manner.

A further objective of the present invention is to provide a joining device between parts of furniture and furnishing items, such as a shoulder and a base, which is not visible to an observer and therefore has a high aesthetical value.

Another objective of the present invention is to provide a joining device between parts of furniture and furnishing items, such as a shoulder and a base, which does not have any protrusion with respect to the upper surface of the base.

A further objective of the present invention is to provide a joining device which also allows a levelling operation, simplifying its assembly and minimizing its encumbrance as much as possible.

The structural and functional characteristics of the present invention and its advantages with respect to the known art will appear more evident from the following description, referring to the enclosed schematic drawings which show embodiment examples of the same invention. In the drawings:
- figure 1 is a sectional view illustrating parts, spaced from each other, of a known joining device for parts of furniture and furnishing items, for example between a shoulder of a piece of furniture and a base or in any case a shelf;
- figures 2 and 3 are two sectional views of the known device of figure 1, wherein figure 2 shows said parts juxtaposed with respect to each other and partially inserted in each other and figure 3 shows said parts completely inserted in each other and tightened;
- figures 4 and 5 are sectional views and a perspective view, with extremely schematic exploded parts, of a joining device with a coaxial leveller with minimum encumbrance according to the present invention;
- figure 6 is a sectional view illustrating parts, spaced from each other, of a joining device for parts of furniture and furnishing items, for example between a shoulder of a piece of furniture and a base or in any case a shelf according to the invention, in an embodiment with said parts spaced from each other;
- figure 7 is a sectional view of the device of figure 6 with said parts juxtaposed and partially inserted in each other to effect a first assembly action;
- figure 8 is a sectional view of the device of figure 6 with said parts completely inserted in each other and tightened;
- figure 9 is a sectional view of the device of figure 6 with parts completely inserted in each other and tightened in the presence of a screwdriver which effects a second levelling action;
- figures 10 and 11 are side views of most of the device of figure 6 in positions rotated by 90° with respect to each other;
- figures 12 and 13 are raised sectional views according to the line XII-XII of figure 10 and the line XIII-XIII of figure 11, respectively, which show internal parts of the joining device;
- figure 14 is a perspective view showing the joining device with a leveller with an exploded part;
- figure 15 is a perspective view showing the joining device with a leveller of figure 14 with half of the casing exploded;
- figure 16 is a perspective view showing the joining device with a leveller completely exploded in its constituent parts;
- figure 17 is a perspective view showing the joining device with a leveller wherein half of the shell is missing, in a connection and blocking phase between the parts;
- figure 18 is a perspective view showing the joining device with a leveller wherein half of the shell is missing, in a levelling phase.

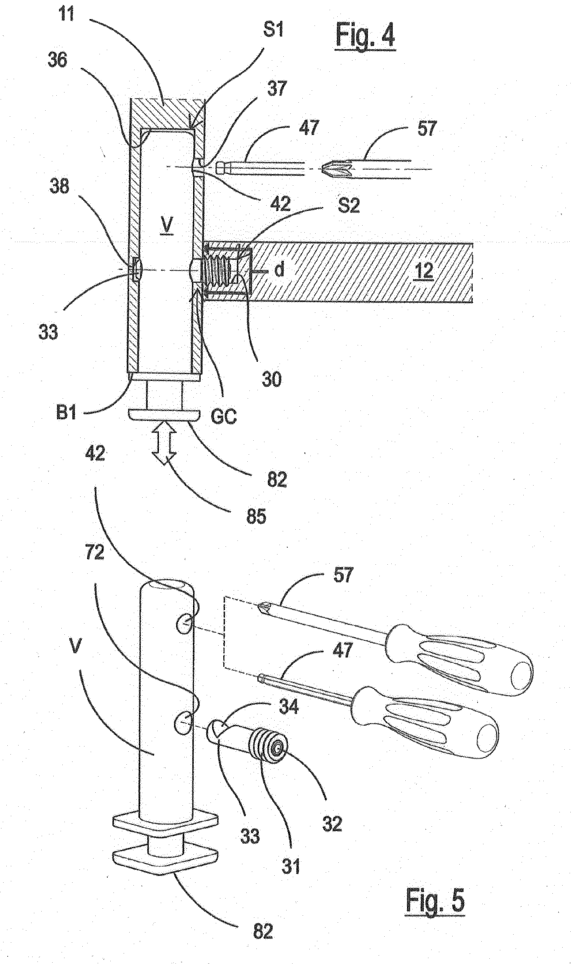

With reference first of all to figures 4 and 5, these schematize a joining device with a coaxial leveller for parts of furniture or furnishing items of the invention, provided with only one hole which allows both the connection and tightening operations between the parts and also the levelling with respect to an underlying floor, to be effected.

In particular, figure 4 shows how the joining device must connect and join a first panel 11, for example a shoulder 11 of a piece of furniture and a second panel 12, for example a base 12 or, in any case, a panel or shelf, partially shown. In the example, the shoulder 11 and the base or panel 12 are shown to be perpendicular to each other but they may also be tilted with respect to each other.

The base 12 contains, at one of its ends, a seat S2 in the form of a horizontal blind hole in which an internally threaded bush 31 is positioned for receiving a threaded end 32 of a pin 33.

The pin 33 provides, in its protruding part, a housing 34 for the tip of a blocking grup screw (not illustrated in figures 4 and 5).

The pin 33 defines a connection group GC to be firmly blocked for stably interconnecting said shoulder 11 and said base 12.

The shoulder 11 provides a seat S1 - for a blocking group GB (not shown in figures 4 and 5) -, having a substantially elongated configuration, in the form of a vertical blind hole which intersects with a first and a second horizontal blind hole 37, 38, spaced from each other.

Said seat S1 characteristically extends from a perimetric lower edge B1 towards the interior of said shoulder or panel 11.

This example of figures 4 and 5 shows a joining device with a coaxial leveller having minimum encumbrance according to the present invention contained in a casing V.

Both a blocking group GB, suitable for acting on the connection group GC, and also a levelling group GL that moves a supporting leg 82 facing an underlying floor P, are contained in the casing V.

The casing V has a first hole 42 through which, by passing two different tools such as a shaped tool 47, for example a hexagonal key, and a normal Phillips screwdriver 57, the two groups are actuated. The shaped tool 47 acts on a blocking group GB, suitable for acting on the connection group GC, and the screwdriver 57 acts on a levelling group GL that moves the leg 82.

The casing V has a second hole 72 from which the pin 33 of the connection group GC passes.

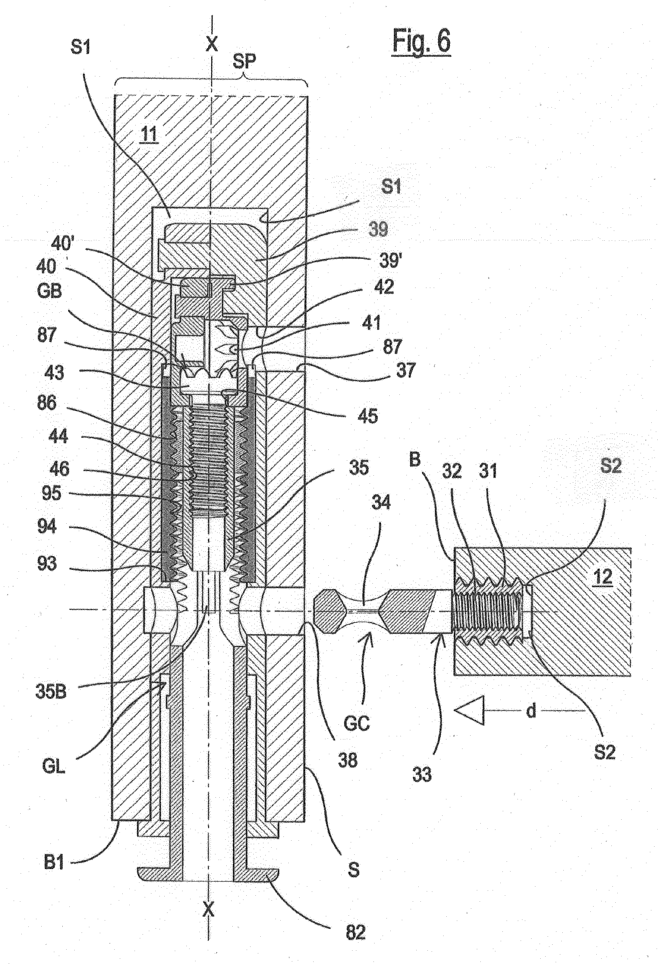

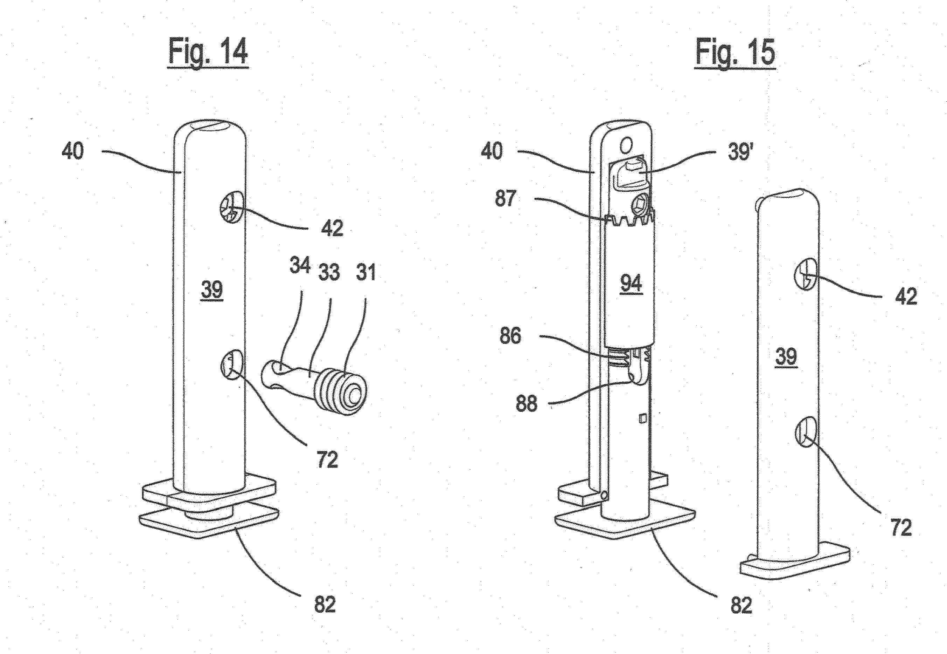

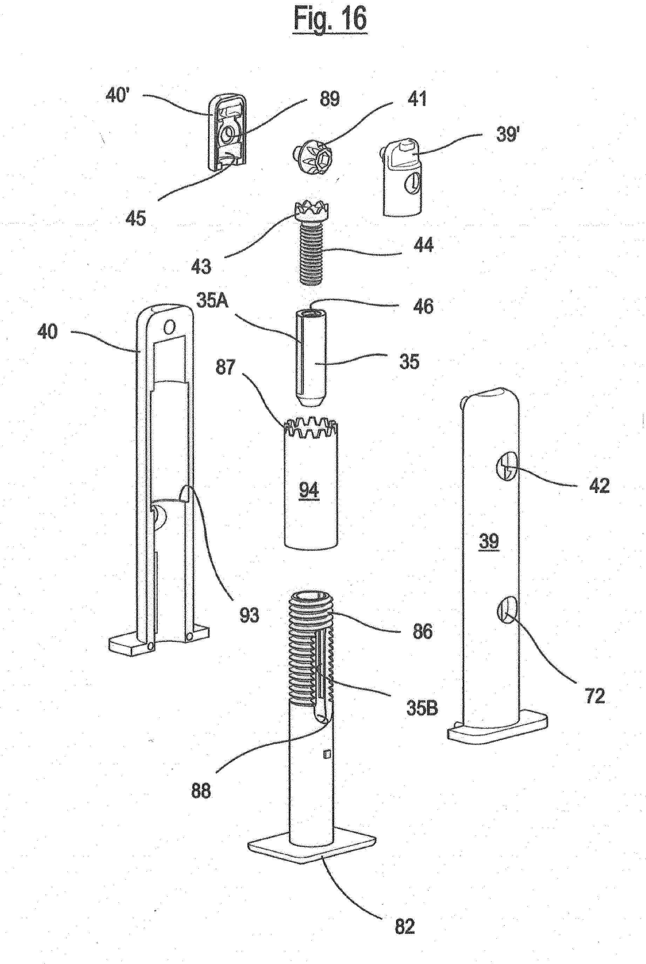

The subsequent figures 6 to 18 show an embodiment of a joining device with a leveller having minimum encumbrance for parts of furniture and furnishing items according to the invention.

The same elements are indicated with the same reference numbers when possible also in this further example.

It can firstly be observed that there is an identical pin 33 connection group GC.

An outer cylindrical casing in two half-shells 39, 40 is housed in the vertical hole or seat S1 for containing both a blocking group GB and a levelling group GL which are described hereunder in greater detail for this example.

A second pair of half-shells 39', 40' forms a second outer cylindrical casing in which an upper part of the blocking group GB is housed.

More specifically, a pinion-toothed crown bevel is housed in this second pair of half-shells 39', 40', which causes the downward sliding of a blocking grub screw 35.

A pinion 41 is in fact rotatingly positioned inside a hole 89 formed in the two half-shells 39', 40' which is aligned with the first horizontal hole 37 of the shoulder 11. The pinion 41 is engaged with a toothed crown 43, formed as head of a threaded screw 44, and can rotate in a seat 45 formed in the two coupled half-shells 39' and 40'. The threaded screw 44 is in turn positioned in a threaded axial hole 46 and inside the grub screw 35. The components 35, 41, 43, 44, 46, define the blocking group GB suitable for acting on the above-mentioned connection group GC composed of the pin 33.

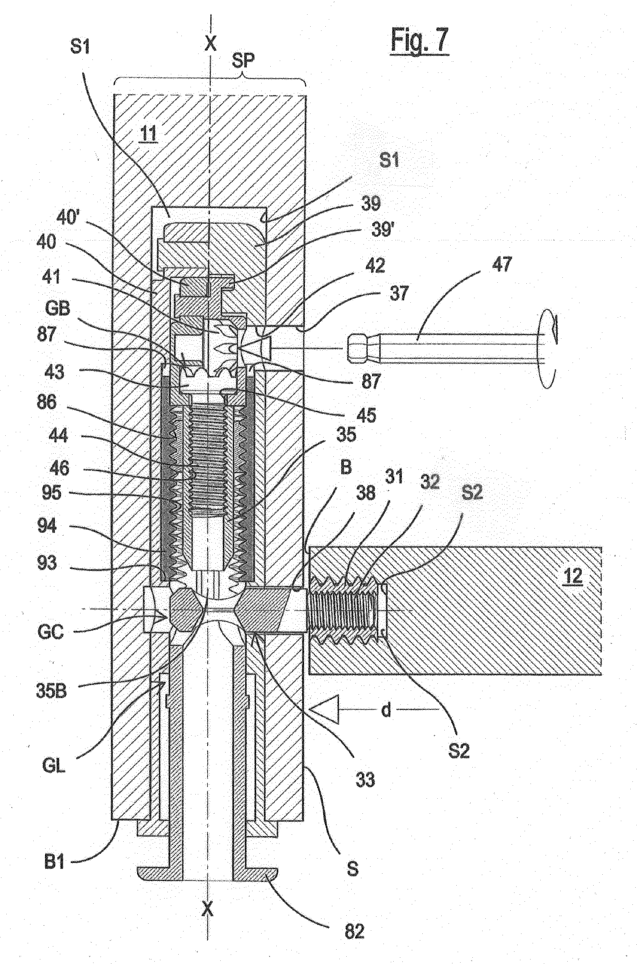

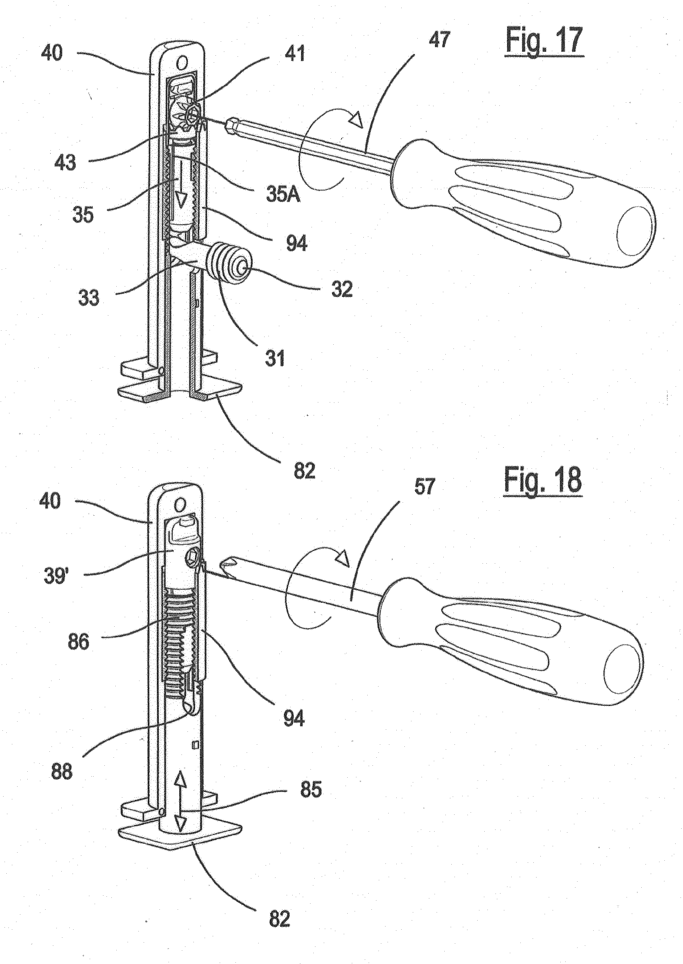

The shaped tool 47, (hexagonal key) is suitable for being inserted in a complementary seat of the pinion 41 passing through the first hole 37 of the shoulder 11 (figures 7 and 17) thus coupling with the same to cause its rotation.

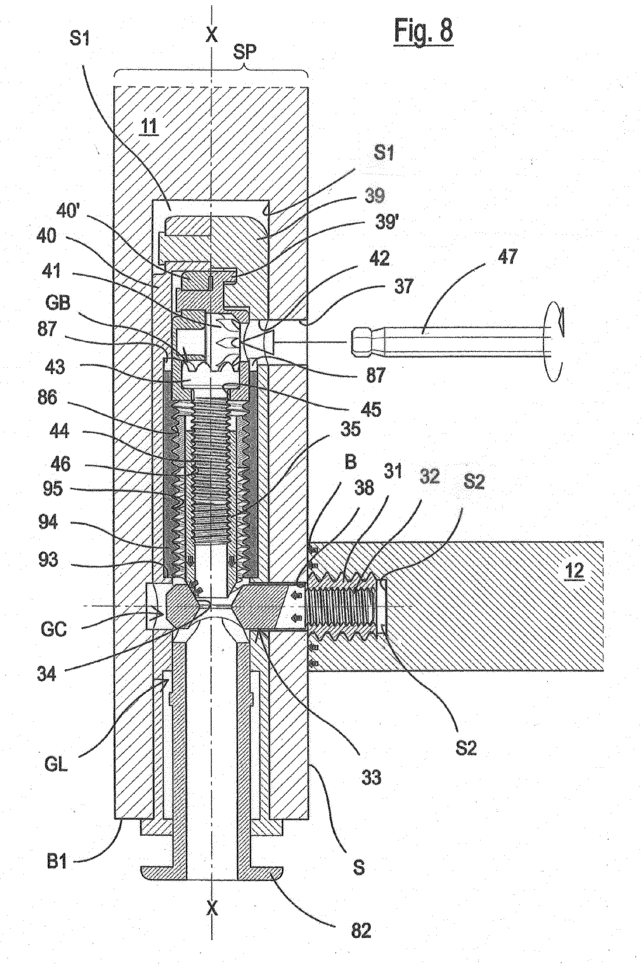

The rotation of the pinion 41 in turn causes the rotation of the toothed crown 43 of the head of the threaded screw 44. The rotation of the threaded screw 44 forces the downward movement of the grub screw 35 (figures 8 and 18).

It can be seen how, in this embodiment, the joining device with a leveller of the present invention essentially comprises the blocking group GB (35, 41, 43, 44, 46) inserted inside a seat S1 (vertical hole) of the shoulder 11, which acts on a pin 33 connection group GC 33 to be blocked, positioned inside the seat S2 of the base 12.

The blocking group GB is inserted in the seat S1 which is contained in the thickness SP of the shoulder or panel 11, wherein a longitudinal axis x of the seat S1 or hole extends from the edge B1 towards the interior, perpendicular to the approach direction d and tightening of the base 12 to the shoulder or panel 11.

Figures 6 to 8 show how parts of the joining device according to the present invention are positioned by placing the two half-shells 39 and 40 in the hole or seat S1 of the shoulder 11 and the pin 33 in the hole or seat S2 of the base 12 (figure 6).

The edge B of the base 12 is then moved towards the surface S of the shoulder 11, inserting the protruding part of the pin 33 into the second horizontal hole 38 of the shoulder 11 (figure 7).

The tool 47, in the example a hexagonal key, is subsequently inserted in the complementary seat of the pinion 41, passing through the first hole 37 of the shoulder 11 so as to cause the rotation of the pinion 41. The rotation of the pinion 41 causes the rotation of the toothed crown 43 of the head of the threaded screw 44. This rotation forces the downward movement of the grub screw 35, provided with anti-rotation protruding teeth 35A, which is thus engaged inside the housing 34 of the pin causing the tightening between the shoulder 11 and the base 12 (figure 8) creating a stable connection and tightening.

Figure 8 indicates, by means of a series of arrows, the scheme of forces at play between the shoulder 11 and base 12 of the piece of furniture with the actuation of the blocking group GB of the joining device.

It has already been specified that not only the blocking group GB described above, but also the levelling group GL described hereunder, are housed in the two half-shells 39, 40.

A cylindrical element 94 is in fact positioned inside the two outer half-shells 39, 40 in a housing, defined above by the bottom of the two internal half-shells 39', 40' and below by a radial annular abutment 93 formed in said two outer half-shells 39, 40.

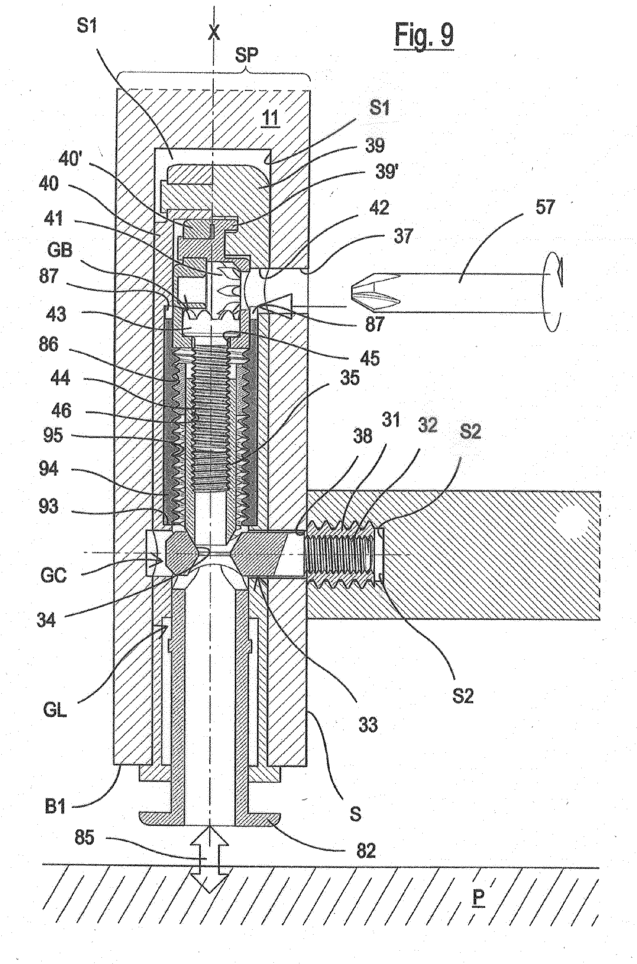

Said cylindrical element 94 is provided with an internal threading 95 which is engaged with a complementary outer threading 86 formed on the upper outer end of the body of the leg 82. Furthermore, the cylindrical element 94 provides an upper toothing at the head 87 which can be reached from the hole 37 of the shoulder 11 and from the hole 42 of the outer half-shell 39 with the elements assembled (figures 9 and 18) .

The cylindrical element 94 at least partially surrounds an end portion of said internal casing 39', 40' and most of the grub screw 35.

Two guiding grooves 35B for the anti-rotation protruding teeth 35A of the grub screw 35 are provided inside the body of the leg 82. Slots 88 are also provided in the body of the leg 82 for allowing the passage of the pin 33.

It can thus be seen how, once the blocking of the base 12 to the shoulder 11 has been effected, as shown in figure 8 and as previously described, an adjustment can be effected by means of the levelling group GL.

As shown in figures 9 and 18, a Phillips screwdriver 57 is used, introducing it into the hole 37 and then into the hole 42 of the outer half-shell 39.

In this way, it is possible to cause the rotation of the upper head toothing 87 and therefore the cylindrical element 94.

Said rotation causes the movement of the leg 82 according to the arrow 85 with regulation with respect to a floor P.

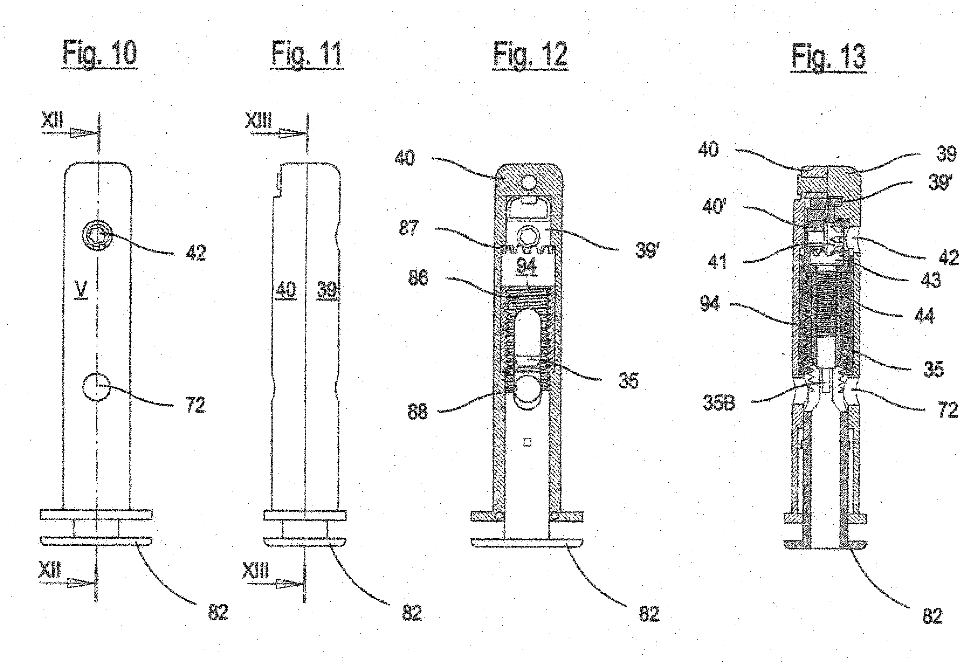

Figures 10 to 16 very clearly show the composition of the embodiment illustrated in all of its details. They also partly indicate how the device is assembled in all of its essential internal and external elements, illustrating a series of sections and overall and exploded perspective views.

A joining device with a leveller according to the invention is therefore particularly compact and has a minimum encumbrance. Furthermore, due to the coaxial arrangement of the blocking group GB and levelling group GL, the constituent pieces are minimized and there is a saving of materials.

Furthermore, the invention shows how the problem of minimizing the visibility of the device has been advantageously solved. The creation of the actuation area on the shoulder of the furniture produces an aesthetically pleasing appearance.

Any possible caps positioned in the holes do not interfere with what is resting on the base of the furniture which is free of any type of hole.

In this way, there are no obstacles on the base for the insertion of any object, eliminating any type of protrusion, even minimum, with respect to the upper surface of the base.

Holes produced on the shoulder are not particularly visible to an observer with respect to holes on the base as in the known art, thus obtaining a high aesthetical value.

Finally, the elimination of holes that intersect with each other in the base eliminates any possible weakening of the base itself that can therefore sustain high loads without the danger of a possible cause of breakage of the base.

The forms of the structure for the production of a joining device of the present invention, as also the materials and assembly modes, can naturally differ from those shown for purely illustrative and non-limiting purposes in the drawings.

The objectives mentioned in the preamble of the description have therefore been achieved.

The protection scope of the present invention is defined by the enclosed claims.

## Claims

1. A joining device, suitable for a piece of furniture comprising at least two panels (11,12),_with a leveller having minimum visibility for parts of furniture and furnishing items, in particular between a first panel (11) comprising a seat (S1), such as a shoulder of a piece of furniture, and a second panel (12) comprising a seat (S2), such as a base or shelf of a piece of furniture, which must be moved towards each other according to an approach direction (d) in order to bring the edge (B) of one panel abutted in a tightening position against a surface (S) of the other panel, said joining device consisting of a blocking group (GB) and a connection group (GC) assembled on said panels (11,12), **characterized in that** a levelling group (GL) is also provided, insertable inside a same seat (S1) which receives the blocking group (GB), wherein said seat (S1) is contained in the thickness (SP) of the panel (11) on which the blocking group (GB) is applied, said seat (S1) having a longitudinal axis (X) which is perpendicular to said direction (d), and extending from an edge (B1) towards the interior of said panels (11,12), said blocking group (GB) and said levelling group (GL) both having the manoeuvring axis coaxial or coinciding.

2. The device according to claim 1, **characterized in that** the manoeuvring axis of the levelling group (GL) coinciding with the manoeuvring axis of the blocking group (GB) is parallel to the approach direction (d).

3. The device according to claim 1, **characterized in that** the manoeuvring axis of the levelling group (GL) coinciding with the manoeuvring axis of the blocking group (GB) is perpendicular to the movement axis of the levelling group (GL).

4. The device according to claim 1, **characterized in that** the manoeuvring axis of the levelling group (GL) coinciding with the manoeuvring axis of the blocking group (GB) is perpendicular to the movement axis of the levelling group (GL), said movement axis of the levelling group (GL) coinciding with the movement axis of the blocking group (GB).

5. The device according to claim 1, **characterized in that** said levelling group (GL) and said blocking group (GB) are enclosed inside a pair of elongated half-shells (39,40).

6. The device according to claim 1 or 2, **characterized in that** said blocking group (GB) comprises a pinion-toothed crown bevel (41,43), which is housed in a casing (39',40') inside a second outer casing (39,40), wherein said second outer casing (39,40) is positioned in said seat (S1) in the form of a hole of said shoulder (11), wherein said bevel controls the movement of a grub screw (35) suitable for being engaged on said connection group (GC).

7. The device according claim 6, **characterized in that** a toothed crown (43) of said bevel extends into a threaded screw (44), which in turn is positioned in a threaded hole (46) axial to and inside said grub screw (35) .

8. The device according to claim 1 or 6, **characterized in that** said levelling group (GL) is positioned in said outer casing (39,40) and comprises a cylindrical element (94) provided with an internal threading (95) which engages with a complementary outer threading (86) situated on an upper outer end of a leg (82) facing a floor (P).

9. The device according to claim 8, **characterized in that** said cylindrical element (94) at least partially surrounds an end portion of said internal casing (39', 40') and said grub screw (35).

10. The device according to claim 8 or 9, **characterized in that** said cylindrical element (94) provides above an upper head toothing (87) that can be reached from a hole (37) of the first panel or shoulder (11) and from the hole (42) formed in the outer half-shell (39).

11. The device according to claim 8, 9 or 10, **characterized in that** two guiding grooves (35B) for anti-rotation protruding teeth (35A) are provided in said leg (82), which extend from the grub screw (35) and slots (88) are provided for allowing the passage of at least part of the connection group (GC).

12. The device according to one or more of the previous claims, **characterized in that** said connection group (GC) comprises a pin (33) that is positioned, in a threaded end (32), in an internally threaded bush (31), positioned in a hole or seat (S2) of said base (12), said pin (33) providing, in its protruding part, a housing (34) for a blocking grub screw (35) of said blocking group (GB).

## Patentansprüche

1. Fügevorrichtung, die für ein Möbelstück geeignet ist, das zumindest zwei Tafeln (11, 12) mit einer Nivelliereinrichtung umfasst, die eine minimale Sichtbarkeit für Möbelteile und Einrichtungsgegenstände aufweist, insbesondere zwischen einer ersten Tafel (11), die einen Sitz (S1) umfasst, wie eine Schulter eines Möbelstücks, und einer zweiten Tafel (12), die einen Sitz (S2) umfasst, wie eine Basis oder ein Regal eines Möbelstücks, die zueinander gemäß einer Annäherungsrichtung (d) bewegt werden müssen, um den Rand (B) einer Tafel in einer Festziehposition in Anlage gegen eine Fläche (S) der anderen Tafel zu bringen, wobei die Fügevorrichtung aus einer Blockiergruppe (GB) und einer Verbindungsgruppe (GC) besteht, die an die Tafeln (11, 12) angebaut sind, **dadurch gekennzeichnet, dass** auch eine Nivelliergruppe (GL) vorgesehen ist, die in einem selben Sitz (S1) einsetzbar ist, der die Blockiergruppe (GB) aufnimmt, wobei der Sitz (S1) in der Dicke (SP) der Tafel (11) enthalten ist, an der die Blockiergruppe (GB) angewendet ist, wobei der Sitz (S1) eine Längsachse (X) aufweist, die rechtwinklig zu der Richtung (d) liegt und sich von einem Rand (B1) zu dem Inneren der Tafeln (11, 12) erstreckt, wobei die Blockiergruppe (GB) und die Nivelliergruppe (GL) beide eine koaxiale oder übereinstimmende Manövrierachse aufweisen.

2. Vorrichtung nach Anspruch 1, **dadurch gekennzeichnet, dass** die Manövrierachse der Nivelliergruppe (GL), die mit der Manövrierachse der Blockiergruppe (GB) übereinstimmt, parallel zu der Annäherungsrichtung (d) ist.

3. Vorrichtung nach Anspruch 1, **dadurch gekennzeichnet, dass** die Manövrierachse der Nivelliergruppe (GL), die mit der Manövrierachse der Blockiergruppe (GB) übereinstimmt, rechtwinklig zu der Bewegungsachse der Nivelliergruppe (GL) ist.

4. Vorrichtung nach Anspruch 1, **dadurch gekennzeichnet, dass** die Manövrierachse der Nivelliergruppe (GL), die mit der Manövrierachse der Blockiergruppe (GB) übereinstimmt, rechtwinklig zu der Bewegungsachse der Nivelliergruppe (GL) ist, wobei die Bewegungsachse der Nivelliergruppe (GL) mit der Bewegungsachse der Blockiergruppe (GB) übereinstimmt.

5. Vorrichtung nach Anspruch 1, **dadurch gekennzeichnet, dass** die Nivelliergruppe (GL) und die Blockiergruppe (GB) in einem Paar länglicher Halbschalen (39, 40) eingeschlossen sind.

6. Vorrichtung nach einem der Ansprüche 1 oder 2, **dadurch gekennzeichnet, dass** die Blockiergruppe (GB) ein Kegelrad mit gezahnter Krone (41, 43) umfasst, das in einem Gehäuse (39', 40') innerhalb eines zweiten Außengehäuses (39, 40) untergebracht ist, wobei das zweite Außengehäuse (39, 40) in dem Sitz (S1) in der Form eines Loches der Schulter (11) positioniert ist, wobei das Kegelrad die Bewegung eines Gewindestiftes (35) steuert, der zum Eingriff an der Verbindungsgruppe (GC) geeignet ist.

7. Vorrichtung nach Anspruch 6, **dadurch gekennzeichnet, dass** sich die gezahnte Krone (43) des Kegelrads in eine mit Gewinde versehene Schraube (44) erstreckt, die ihrerseits in einem Gewindeloch (46) axial zu und innerhalb des Gewindestiftes (35) positioniert ist.

8. Vorrichtung nach einem der Ansprüche 1 oder 6, **dadurch gekennzeichnet, dass** die Nivelliergruppe (GL) in dem Außengehäuse (39, 40) positioniert ist und ein zylindrisches Element (94) umfasst, das mit einem Innengewinde (95) versehen ist, das mit einem komplementären Außengewinde (86) in Eingriff steht, das an einem oberen äußeren Ende eines Schenkels (82) angeordnet ist, der zu einem Boden (P) weist.

9. Vorrichtung nach Anspruch 8, **dadurch gekennzeichnet, dass** das zylindrische Element (94) zumindest teilweise einen Endabschnitt des Innengehäuses (39', 40') und des Gewindestiftes (35) umgibt.

10. Vorrichtung nach einem der Ansprüche 8 oder 9, **dadurch gekennzeichnet, dass** das zylindrische Element (94) darüber eine obere Kopfverzahnung (87) bereitstellt, die von einem Loch (37) der ersten Tafel oder Schulter (11) oder von dem Loch (42), das in der äußeren Halbschale (39) gebildet ist, erreichbar ist.

11. Vorrichtung nach einem der Ansprüche 8, 9 oder 10, **dadurch gekennzeichnet, dass** zwei Führungsnuten (35B) für eine Drehsicherung bereitstellende, vorragende Zähne (35A) in dem Schenkel (82) vorgesehen sind, die sich von dem Gewindestift (35) erstrecken, und Schlitze (88) vorgesehen sind, um den Durchgang zumindest eines Teils der Verbindungsgruppe (GC) zu ermöglichen.

12. Vorrichtung nach einem der vorhergehenden Ansprüche, **dadurch gekennzeichnet, dass** die Verbindungsgruppe (GC) einen Stift (33) umfasst, der in einem Gewindeende (32) in einer Innengewindebuchse (31) positioniert ist, die in einem Loch oder Sitz (S2) der Basis (12) positioniert ist, wobei der Stift (33) in seinem vorragenden Teil ein Gehäuse (34) für einen blockierenden Gewindestift (35) der Blockiergruppe (GB) bereitstellt.

## Revendications

1. Dispositif d'assemblage, convenant pour une pièce de meuble, comprenant au moins deux panneaux (11, 12), avec un niveleur ayant une visibilité minimale pour des pièces de meuble et articles d'ameublement, en particulier entre un premier panneau (11) comprenant une embase (S1), telle qu'un épaulement d'une pièce de meuble et un second panneau (12), comprenant une embase (S2), tel qu'une base ou étagère d'une pièce de meuble, qui doivent impérativement être déplacés l'un vers l'autre selon une direction d'approche (d), afin de mettre le bord (B) d'un panneau en appui dans une position de serrage contre une surface (S) de l'autre panneau, ledit dispositif d'assemblage se composant d'un groupe de blocage (GB) et d'un groupe de liaison (GC), assemblés sur lesdits panneaux (11, 12),
**caractérisé en ce**
**qu'**un groupe de nivelage (GL) est aussi prévu, pouvant être inséré à l'intérieur d'une même embase (S1), qui loge le groupe de blocage (GB), dans lequel ladite embase (S1) est contenu dans l'épaisseur (SP) du panneau (11), sur lequel est appliqué le groupe de blocage (GB), ladite embase (S1) ayant un axe longitudinal (X) qui est perpendiculaire à ladite direction (d) et s'étendant depuis un bord (B1) vers l'intérieur desdits panneaux (11, 12), ledit groupe de blocage (GB) et ledit groupe de nivelage (GL) ayant tous deux l'axe de manoeuvre coaxial ou coïncidant.

2. Dispositif selon la revendication 1,
**caractérisé en ce que**
l'axe de manoeuvre du groupe de nivelage (GL), qui coïncide avec l'axe de manoeuvre du groupe de blocage (GB), est parallèle à la direction d'approche (d).

3. Dispositif selon la revendication 1,
**caractérisé en ce que**
l'axe de manoeuvre du groupe de nivelage (GL), qui coïncide avec l'axe de manoeuvre du groupe de blocage (GB), est perpendiculaire à l'axe de déplacement du groupe de nivelage (GL).

4. Dispositif selon la revendication 1,
**caractérisé en ce que**
l'axe de manoeuvre du groupe de nivelage (GL), qui coïncide avec l'axe de manoeuvre du groupe de blocage (GB), est perpendiculaire à l'axe de déplacement du groupe de nivelage (GL), ledit axe de déplacement du groupe de nivelage (GL) coïncidant avec l'axe de déplacement du groupe de blocage (GB).

5. Dispositif selon la revendication 1,
**caractérisé en ce que**
ledit groupe de nivelage (GL) et ledit groupe de blocage (GB) sont englobés à l'intérieur d'une paire de demi-coques allongées (39, 40).

6. Dispositif selon la revendication 1 ou 2,
**caractérisé en ce que**
ledit groupe de blocage (GB) comprend un chanfrein de couronne dentée à pignons (41, 43), qui est logé dans un boîtier (39', 40'), à l'intérieur d'un second carter extérieur (39, 40), dans lequel ledit second carter extérieur (39, 40) est positionné dans ladite embase (S1) dans la forme d'un trou dudit épaulement (11), dans lequel ledit chanfrein commande le déplacement d'une vis sans tête (35), convenant pour être mise en prise sur ledit groupe de liaison (GC).

7. Dispositif selon la revendication 6,
**caractérisé en ce**
**qu'**une couronne dentée (43) dudit chanfrein s'étend dans une vis filetée (44), qui est positionnée à son tour dans un trou fileté (46), axial par rapport à et à l'intérieur de ladite vis sans tête (35).

8. Dispositif selon la revendication 1 ou 6,
**caractérisé en ce que**
ledit groupe de nivelage (GL) est positionné dans ledit carter extérieur (39, 40) et comprend un élément cylindrique (94), prévu avec un filetage interne (95), qui se met en prise avec un filetage extérieur complémentaire (86), situé sur une extrémité extérieure supérieure d'un pied (82), faisant face à un plancher (P).

9. Dispositif selon la revendication 8,
**caractérisé en ce que**
ledit élément cylindrique (94) entoure au moins partiellement une partie extrême dudit carter interne (39', 40') et ladite vis sans tête (35).

10. Dispositif selon la revendication 8 ou 9,
**caractérisé en ce que**
ledit élément cylindrique (94) prévoit, au-dessus, une denture à tête supérieure (87), qui peut être atteinte à partir d'un trou (37) du premier panneau ou épaulement (11) et à partir du trou (42), formé dans la demi-coque extérieure (39).

11. Dispositif selon la revendication 8, 9 ou 10,
**caractérisé en ce que**
deux rainures de guidage (35B), pour des dents anti-rotation faisant saillie (35A), sont prévues dans ledit pied (82), qui s'étendent depuis la vis sans tête (35) et des fentes (88) sont prévues, pour permettre le passage d'au moins une partie du groupe de liaison (GC).

12. Dispositif selon une ou plus des revendications précédentes, **caractérisé en ce que**
ledit groupe de liaison (GC) comprend un axe (33), qui est positionné, dans une extrémité filetée (32), dans une douille taraudée (31), positionnée dans un trou ou embase (S2) dudit support (12), ledit axe (33) prévoyant, dans sa partie faisant saillie, un logement (34) pour une vis sans tête de blocage (35) dudit groupe de blocage (GB).
